# EUROPEAN PATENT APPLICATION

(11) **EP 3 745 344 A1**
(43) Date of publication of application: **02.12.2020**
(21) Application number: 19760182.6
(22) Date of filing: 14.02.2019
(51) Int. Cl.: G06Q 50/04, G05B 19/418, G06Q 10/04, H02J 3/00, H02J 3/14

(54) **PREDICTION SYSTEM, PREDICTION METHOD, AND PROGRAM**

(30) Priority: 27.02.2018 JP 2018033366
(71) Applicant: MITSUBISHI HEAVY INDUSTRIES, LTD., Chiyoda-ku Tokyo 100-8332 (JP)
(72) Inventor: TESHIMA Teppei, Tokyo 100-8332 (JP); ENOMOTO Tomoyuki, Tokyo 100-8332 (JP); OTSU Hidenobu, Tokyo 100-8332 (JP)
(74) Representative: Henkel & Partner mbB
(86) International application number: PCT/JP2019/005430
(87) International publication number: WO 2019/167656

(57) **Abstract**

According to the present invention, a selection unit receives selection of at least one explanatory variable from among a plurality of candidate explanatory variables regarding the operation of a factory. A value input unit receives an input of a value regarding the selected explanatory variable. An energy demand identification unit identifies the value of a target variable regarding the operation of the factory on the basis of the inputted value. An output unit outputs the identified value of the target variable.

## Description

### [Technical Field]

The present invention relates to a prediction system, a prediction method, and a program. The present application claims priority to Japanese Patent Application No. 2018-033366 filed in Japan on February 27, 2018, and the content thereof is incorporated herein.

### [Background Art]

Patent Document 1 discloses a technique for predicting the total electric power demand in a group of factories including a large number of manufacturing lines.

### [Citation List]

### [Patent Document]

[Patent Document 1]
Japanese Patent No. 2004-129322

### [Summary of Invention]

### [Technical Problem]

In the technique described in Patent Document 1, the operation schedule is input to the electric-power-management computer system in advance for each manufacturing line, and the electric-power-management computer system determines the energy demand of each of the plurality of manufacturing lines based on the operation schedule. According to Patent Document 1, when the electric power demand predicted by the electric-power-management computer system exceeds the upper limit of the contract demand, the electric power use is restricted. On the other hand, factory managers or the like have a desire to make an operation plan in advance so that the electric power demand does not exceed the upper limit of the contract demand.

In the technique described in Patent Document 1, in order to change the operation plan and acquire the energy demand again, the manager or the like needs to input the detailed operation plan for all the manufacturing lines into the electric-power-management computer system. However, when the number of manufacturing lines is large, since the amount of information on the operation plan to be input for recalculation is large, the burden for the manager or the like increases.

Although it is conceivable that a simulator is designed to perform calculations based on the operation plan of a facility with a large load, it is impossible to design the simulator in case that the facility in which the load is large is not known in advance.

An object of the present invention is to provide a prediction system, a prediction method, and a program which can predict the operation of a factory in the factory including a plurality of facilities, based on the input of explanatory variables relating to the operation of an arbitrary facility. Particularly, it is to provide a prediction system, a prediction method, and a program capable of predicting the energy demand of a factory.

### [Solution to Problem]

According to the first aspect of the present invention, a prediction system includes: a selection unit configured to receive selection of at least one of an explanatory variable among a plurality of explanatory variable candidates relating to an operation of a factory; a value input unit configured to receive input a value relating to the selected explanatory variable; an identification unit configured to identify a value of an objective variable relating to the operation of the factory based on the input value; and an output unit configured to output the identified value of the objective variable.

According to the second aspect of the present invention, in the prediction system according to the first aspect, the value of the objective variable relating to the operation of the factory may be a value relating to an energy demand of the factory.

According to the third aspect of the present invention, the prediction system according to the first or second aspect may further include: a storage unit configured to store history data including a set of values of a plurality of explanatory variable candidates relating to an operation of a factory and a value of at least one of objective variable relating to the operation of the factory; and a learning unit configured to learn parameters of a model in which the selected explanatory variable is input and the objective variable is output based on the history data; wherein the identification unit identifies the value of the objective variable by inputting the input value into the learned model.

According to a fourth aspect of the present invention, in the prediction system according to the third aspect, the set of values of the plurality of explanatory variable candidates relating to the operation of the factory and the value of at least one of objective variable relating to the operation of the factory stored in the storage unit may be a set of values of the plurality of explanatory variable candidates relating to the operation of the factory and the value of at least one of objective variable relating to an energy demand of the factory; and the value of the objective variable output by the model is a value relating to the energy demand of the factory.

According to the fifth aspect of the present invention, the prediction system according to any one of the first to third aspects may include: a candidate input unit configured to receive inputs of values of explanatory variable candidates added to the history data.

According to a sixth aspect of the present invention, in the prediction system according to any one of the first to fifth aspects, the value input unit may receive an input of a time series of values relating to the explanatory variable.

According to the seventh aspect of the present invention, the prediction system according to the sixth aspect may further include: a unit-time changing unit configured to receive a change of unit time in the time series of the values relating to the explanatory variable.

According to an eighth aspect of the present invention, in the prediction system according to any one of the first to seventh aspects, the output unit may output a display screen including the identified value of the objective variable, and a value of the objective variable or a comparison value of the objective variable included in the history data.

According to a ninth aspect of the present invention, in the prediction system according to any one of the first to eighth aspects, the input unit may receive the input of the selected value relating to the explanatory variable in the plurality of the factories; and the identification unit may identify a sum value of values of the objective variable relating to the plurality of the factories based on the input values.

According to the tenth aspect of the present invention, a prediction method comprising the steps of: receiving selection of at least one of an explanatory variable among a plurality of explanatory variable candidates relating to an operation of a factory; receiving input a value relating to the selected explanatory variable; identifying a value of an objective variable relating to the operation of the factory based on the input value; and outputting the identified value of the objective variable.

According to the eleventh aspect of the present invention, in the prediction method according to the tenth aspect, the value of the objective variable relating to the operation of the factory may be a value relating to an energy demand of the factory.

According to the twelfth aspect of the present invention, a program which causes a computer to execute the steps of: receiving selection of at least one of an explanatory variable among a plurality of explanatory variable candidates relating to an operation of a factory; receiving input a value relating to the selected explanatory variable; identifying a value of an objective variable relating to the operation of the factory based on the input value; and outputting the identified value of the objective variable.

According to the thirteenth aspect of the present invention, in the program according to the twelfth aspect, the value of the objective variable relating to the operation of the factory may be a value relating to an energy demand of the factory.

### [Advantageous Effects of Invention]

According to at least one of the above aspects, the energy demand prediction system can predict the energy demand of a factory in the factory including a plurality of facility, based on the input of explanatory variables relating to the operation of an arbitrary facility.

### [Brief Description of Drawings]

FIG. 1 is a schematic diagram illustrating a configuration of an energy demand prediction system according to a first embodiment.
FIG. 2 is a schematic block diagram illustrating a configuration of an energy demand prediction device according to a first embodiment.
FIG. 3 is a flowchart illustrating an operation of the energy demand prediction device according to the first embodiment.
FIG. 4 is a diagram illustrating an example of explanatory variable selection screen.
FIG. 5 is a diagram illustrating an example of input screen of operation plan.
FIG. 6 is a diagram illustrating an example of output screen of predicted result for energy demand according to the first embodiment.
FIG. 7 is a diagram illustrating an example of output screen of predicted result for energy demand according to a second embodiment.
FIG. 8 is a schematic block diagram illustrating a configuration of a computer according to at least one embodiment.

### [Description of Embodiments]

### <Definition>

In the present identification, the term "identify" means to define a second value that can take a plurality of values using the first value. For example, the term "identify" means to calculate a second value from the first value, read a second value corresponding to the first value with reference to a table, search for a second value using the first value as a query, select a second value from a plurality of candidates based on the first value, and estimate or predict a second value from the first value.

The term "acquire" means acquiring a new value. For example, the term "acquire" includes receiving a value, receiving an input of a value, reading a value from a table, and calculating another value from a certain value.

### <First Embodiment>

Hereinafter, embodiments will be described in detail with reference to the drawings.

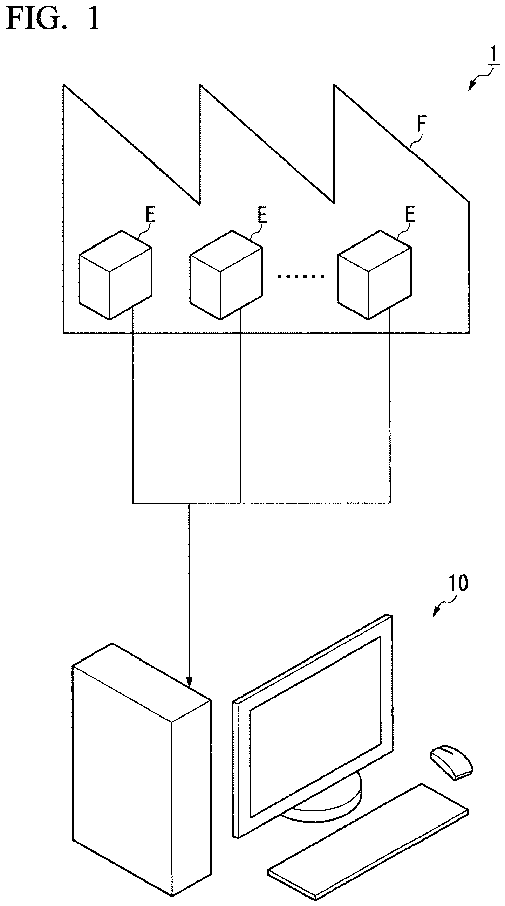

FIG. 1 is a schematic diagram illustrating a configuration of an energy demand prediction system according to a first embodiment.

The energy demand prediction system 1 includes a factory F including a plurality of facilities E and an energy demand prediction device 10.

Each facility E operates by electric power supplied from the outside. Each facility E operates and stops according to the operation plan. The operation plan includes information on the operating time zones and operating days of the facility. That is, the operation plan is represented by a time series of operating states of the facility E.

The energy demand prediction device 10 predicts the energy demand of the factory F based on the operation plan of each facility E, the actual value of power consumption of each facility E, and the actual value of the power consumption of the entire factory F. The actual value of the power consumption of each facility E is detected by, for example, a sensor (not shown) installed in the facility E. Here, the information relating to the operation of the facility E of the factory F is an explanatory variable candidate relating to the operation of the factory, and the energy demand of the factory F is the objective variable relating to the operation of the factory.

### <Configuration of energy demand prediction device >

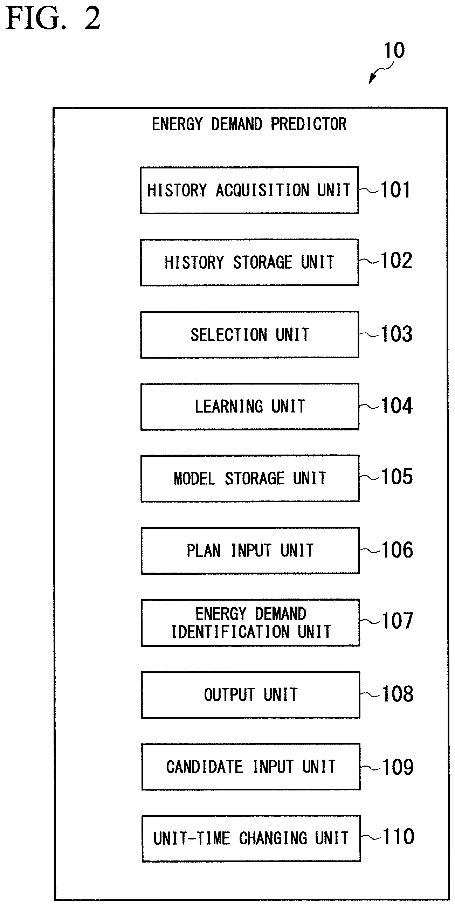

FIG. 2 is a schematic block diagram illustrating a configuration of the energy demand prediction device according to the first embodiment.

The energy demand prediction device 10 includes a history acquisition unit 101, a history storage unit 102, a selection unit 103, a model storage unit 105, a learning unit 104, a plan input unit 106, an energy demand identification unit 107, an output unit 108, a candidate input unit 109, and a unit-time changing unit 110.

The history acquisition unit 101 acquires an operation plan and a time series of power consumption from each facility E of the factory F. The history acquisition unit 101 may read the operation plan from the control device of the facility E or may acquire the operation plan by input from a user such as a manager of the factory F. The history acquisition unit 101 acquires power consumption from a sensor installed in the facility E. The operation plans of the plurality of facilities E, that is, the information on the operation time zones and operation days of the plurality of facilities E is an example of a plurality of explanatory variable candidates relating to the operation of the factory. Further, the power consumption of the plurality of facilities E is an example of an objective variable relating to the energy demand of the factory.

The history storage unit 102 stores operation plans and a time series of power consumption of the plurality of facilities E acquired by the history acquisition unit 101.

The selection unit 103 receives a selection of at least one explanatory variable among the operation plans of the plurality of facilities E from the user. For example, the user can select, as an explanatory variable, an operation plan of one or a plurality of facilities E that are considered to have a great influence on the increase or decrease in power consumption during the operation of the factory F. That is, the user does not need to input the operation plans of all the facilities E included in the factory F in order to predict the energy demand. At this time, the user may select only one of the operation time zone and operation days of the facility E as an explanatory variable.

The model storage unit 105 stores a model used to identify the total power consumption of the factory F based on the operation plan. Examples of the model stored in the model storage unit 105 include a neural network model and a Bayesian model.

Such that information stored in the history storage unit 102 is used as training data, the operation plan for the facility E selected by the user is input, and the time series of the total power consumption of the factory F is output, then the learning unit 104 trains the model stored in the model storage unit 105. That is, the learning unit 104 assigns parameters to the model stored in the model storage unit 105 based on the information stored in the history storage unit 102.

The plan input unit 106 receives an input of an operation plan relating to the selected facility E from the user.

The energy demand identification unit 107 identifies the time series of the total power consumption of the factory F by inputting the operation plan input to the plan input unit 106 into the model stored in the model storage unit 105. That is, the energy demand identification unit 107 predicts the energy demand of the entire factory F based on the operation plan relating to some of the facilities E included in the factory F. Hereinafter, the time series of the total power consumption identified by the energy demand identification unit 107 is also referred to as a predicted energy demand.

The output unit 108 outputs the total power consumption of the factory F identified by the energy demand identification unit 107.

The candidate input unit 109 receives the input of the operation plan relating to the facility E in which the operation plan is not stored in the history storage unit 102 among facilities E of the factory F. The operation plan input to the candidate input unit 109 is stored in the history storage unit 102 as a new explanatory variable candidate. For this reason, the number of explanatory variable candidates can be increased.

The unit-time changing unit 110 receives a change in the unit time of the operation time zone in the operation plan of each facility E. For example, when the operation time zone is set in units of one hour for the operation plan stored in the history storage unit 102, the unit-time change unit 110 can cause the unit time of the operation time zone in the operation plan input to the plan input unit 106 to be changed to 3 hours according to the user's input.

### <Operation of energy demand prediction device>

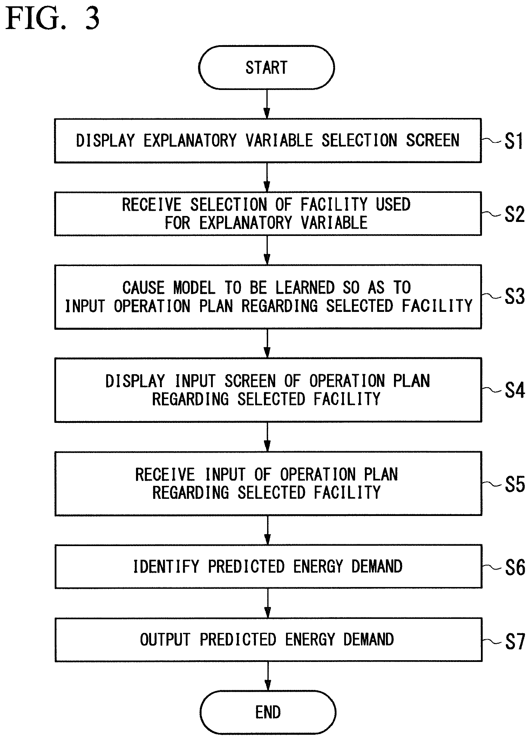

FIG. 3 is a flowchart illustrating the operation of the energy demand prediction device according to the first embodiment.

The history acquisition unit 101 of the energy demand prediction device 10 acquires an operation plan and power consumption from each facility E of the factory F and records them in the history storage unit 102 before performing the energy demand prediction process.

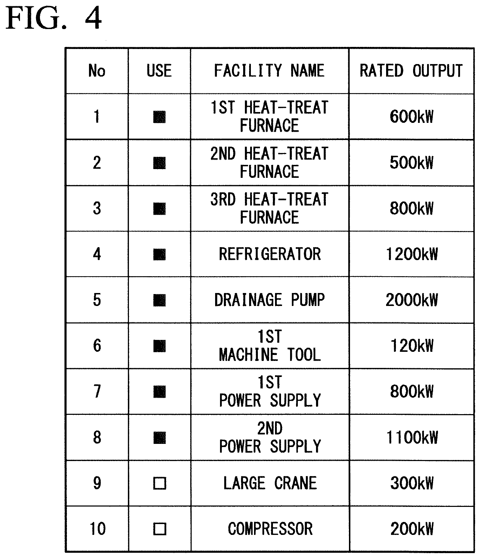

When the energy demand prediction process is started, the selection unit 103 of the energy demand prediction device 10 displays the explanatory variable selection screen including a list of the facilities E that are explanatory variable candidates (step S1). FIG. 4 is a diagram illustrating an example of explanatory variable selection screen. On the explanatory variable selection screen, a name, a rated output, and a check box for each facility E are displayed. The selection unit 103 receives a selection of the facility E used as an explanatory variable in the energy demand prediction process from the user (step S2). The user selects the facility E used as the explanatory variable by checking the check box in the column of the facility E used as the explanatory variable. Further, the user may rewrite the name and rated output of each explanatory variable candidate. Further, the user can deselect the check box in the column of the facility E to deselect the facility E relating to the checked check box, and consequently remove the facility E from the explanatory variables.

When the selection unit 103 receives the selection of the facility E, by using information stored in the history storage unit 102 as training data, the learning unit 104 trains the model stored in the model storage unit 105 such that the operation plan relating to the facility E selected by the user is input and the time series of the total power consumption of the factory F is output (step S3). As a result, the energy demand prediction device 10 can generate a model for predicting the total power consumption of the factory F based on the operation plan of the facility E selected by the user. Since the learning unit 104 trains the model based on the selection result of the facility E, the energy demand prediction device 10 can appropriately predict the total power consumption of the factory F without regarding as each facility E stopping even if the operation plan is not input for the facility E not selected.

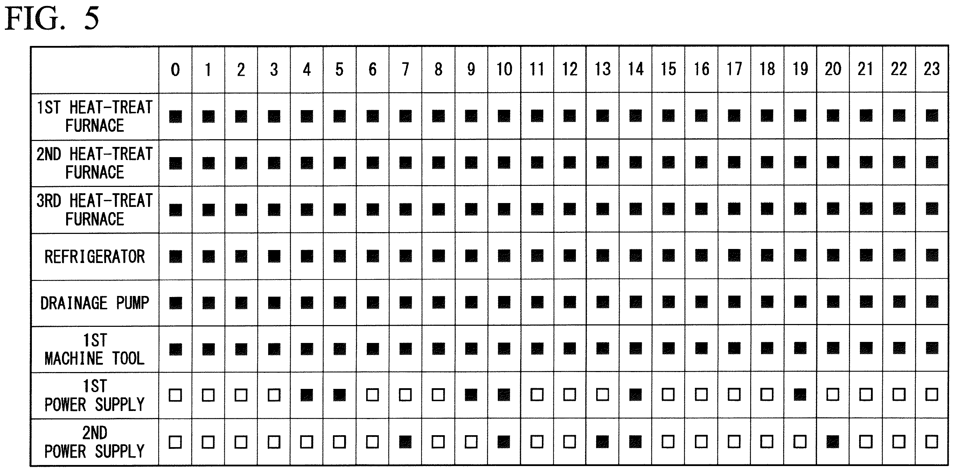

Next, the plan input unit 106 displays an input screen of the operation plan relating to each selected facility E (step S4). That is, the plan input unit 106 displays the input screen for the operation time zone and the input screen for the operation days on the screen. FIG. 5 is a diagram illustrating an example of input screen of operation plan. On the input screen of the operation plan, a check box indicating operation or stop is displayed for a plurality of time zone or a plurality of days of the selected facility E. The plan input unit 106 receives an input of an operation plan relating to each selected facility E from the user (step S5). The user inputs the operation plan of each facility E by combining selection/deselection of the check boxes relating to the time zone or the date for each facility E.

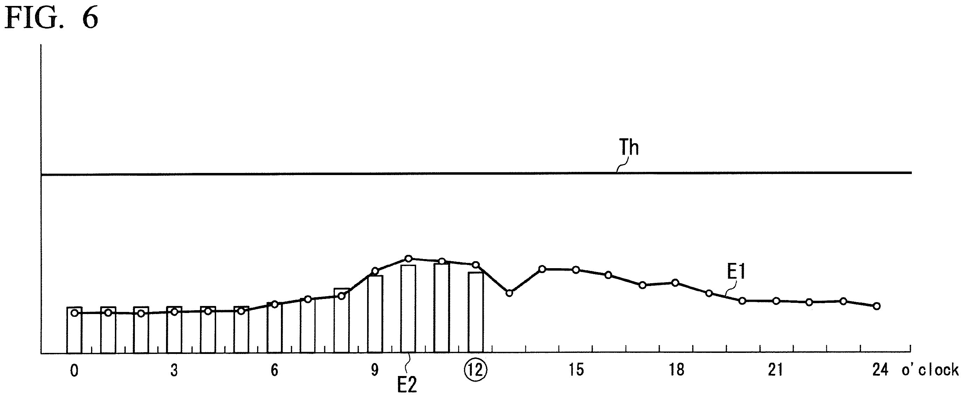

The energy demand identification unit 107 identifies the time series (predicted energy demand E1) of the total power consumption of the factory F by inputting the operation plan input to the plan input unit 106 into the model stored in the model storage unit 105 (step S6). The output unit 108 outputs the predicted energy demand E1 identified by the energy demand identification unit 107 (step S7). FIG. 6 is a diagram illustrating an example of output screen of predicted result for energy demand according to the first embodiment. The output unit 108 outputs the time series of power consumption (measured energy demand E2) stored in the history storage unit 102 and the value of contract demand Th of the factory F (comparison value of objective variable) in addition to the predicted energy demand E1 identified by the energy demand identification unit 107. For this reason, the user can visually recognize the difference between the predicted energy demand E1 and the measured energy demand E2, and visually recognize whether the total power consumption of the factory F will exceed the value of contract demand Th or not in the future.

When the difference between the predicted energy demand E1 and the measured energy demand E2 is large, the user can retrain the model such that the difference between the predicted energy demand E1 and the measured energy demand E2 is small by adding or changing the facility E used as an explanatory variable. For this reason, the user can identify the facility E that is the control factor of the total power consumption in the factory F.

When the predicted energy demand E1 exceeds the value of contract demand Th, the user can change the operation plan and cause the energy demand prediction device 10 to predict the energy demand again. At this time, since it is not necessary to input the operation plans for all the facilities, the user can easily change the operation plans for predicting energy demand.

In addition, the user can add an explanatory variable candidate when the user wants to cause the energy demand prediction device 10 to more accurately predict the energy demand. When the candidate input unit 109 receives the input of the operation plan relating to the new explanatory variable candidate from the user, the candidate input unit 109 records the input in the history storage unit 102. After that, the learning unit 104 can train the model stored in the model storage unit 105 using the operation plan relating to the added explanatory variable candidate.

Further, the user can change the unit time of the operation plan when input items of the operation plan in step S5 are many and complicated and when the user wants to identify the operation plan in more detail. The unit-time changing unit 110 receives an input of the changed unit time from the user. The unit-time changing unit 110 converts the operation plan stored in the history storage unit 102 into the operation plan relating to the input unit time. For example, the unit-time changing unit 110 changes an operation plan of 1-hour unit to an operation plan of 3-hour unit. For example, the unit-time changing unit 110 may determine the state of the facility E in the time zone as the operation state in case that at least the operation is included in the time zone, may apply the state of the operation or the stop, whichever is larger, or may determine the state of the facility E in the time zone as the stop state in case that at least the stop is included in the time zone when a different state is included in the time zone relating to the changed unit time, such as when 2 hours are operating and 1 hour is stopped in a certain time zone of 3-hour unit. When the unit-time changing unit 110 receives the change of the unit time, the plan input unit 106 displays the input screen of operation plan relating to the changed unit time.

### <Action/effect>

As described above, according to the first embodiment, the energy demand prediction system 1 receives the selection of at least one facility E from the plurality of facilities E of the factory F and receives the input of the operation plan relating to the selected facility E. Then, the energy demand prediction system 1 identifies the total power consumption of the factory F based on the input operation plan. For this reason, the user can acquire the energy demand of the entire factory F by inputting the operation plan of arbitrary facility E in the factory F including the some facility E. Therefore, regardless of the number of facilities E included in the factory F, the input of the operation plan does not become complicated for the user.

### <Second Embodiment>

The energy demand prediction system 1 according to the first embodiment calculates the total power consumption of one factory F. By the way, the contract demand is not necessarily made in units of factories, and one contract demand may be set for a plurality of factories F. In this case, an operation may be performed in which the operation days and operation time zone of a plurality of factories F are shifted. That is, the other factories are controlled based on the information of one factories F, the entire factories F are controlled by mutually referring to the information of a plurality of factories F, and so on. Therefore, the energy demand prediction system 1 according to the second embodiment calculates the total power consumption relating to a plurality of factories F.

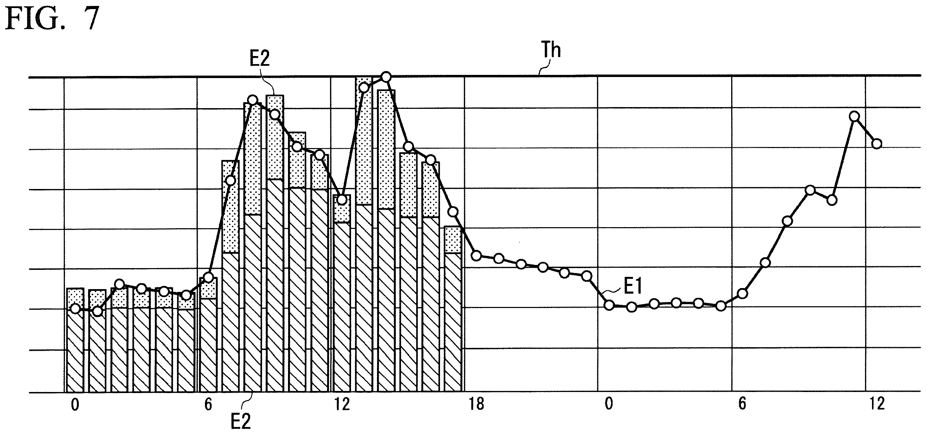

The configuration of the energy demand prediction device 10 according to the second embodiment is the same as that according to the first embodiment. At this time, the history acquisition unit 101 acquires the time series of the operation plan and the power consumption from each facility E of the plurality of factories F. The user selects the facility E relating to the explanatory variable from the plurality of facility E of the plurality of factories F. At this time, the facility E may not be selected for some of the factories F. The learning unit 104 trains the model so that the operation plan relating to the selected facility E is input and the total power consumption of all factories F is output. The energy demand identification unit 107 identifies the total power consumption of all factories F, that is, the predicted energy demand E1 based on the input operation plan. The output unit 108 outputs the predicted energy demand E1 of all factories F identified by the energy demand identification unit 107. FIG. 7 is a diagram illustrating an example of output screen of predicted result for energy demand according to a second embodiment. The output unit 108 outputs the time series of power consumption (measured energy demand E2) of each factory F stored in the history storage unit 102 and the value of contract demand Th in addition to the predicted energy demand E1 identified by the energy demand identifying unit 107.

The energy demand prediction system 1 according to the second embodiment trains the model so that the operation plan relating to the selected facility E is input and the total power consumption of all factories F is output, and thus the total power consumption of the factory F is identified, but the present invention is not limited to this. For example, the energy demand prediction system 1 according to another embodiment may train the model so that the operation plan relating to the selected facility E is input and the total power consumption of each factory F is output, and identify the total power consumption of the entire factories F by taking the sum of the total power consumption of each factories.

Although one embodiment has been described in detail above with reference to the drawings, the specific configuration is not limited to the above, and various design changes and the like are possible.

For example, in the embodiment described above, the operation plan of each facility E is used as an explanatory variable, but the present invention is not limited to this. For example, in other embodiments, the production planning of the factory F, the type of the facility E, the arrangement plan of the workers who operate the facility E, the event calendar of the factory F, and the like may be used as the explanatory variables.

Further, in the embodiment described above, an example in which the prediction system is implemented in the energy demand prediction device 10 that predicts energy demand has been described, but the present invention is not limited to this, and a prediction system according to another embodiment identifies the objective variable other than energy demand. For example, in another embodiment, the prediction system may use a parameter relating to the manufacture of the product in the factory F as an explanatory variable, and use the number of defective portions occurring in the finished product as the objective variable.

More specifically, the prediction system acquires data relating to at least one manufacture for each of the plurality of manufacturing processes in order to predict the number of defective portions of the finished product in the factory F. The prediction system may predict the number of defective portions that occur in the finished product instead of the prediction of the energy demand in the factory F using some or all of these data as explanatory variables. In this case, it is possible to predict the number of defective portions of the finished product from the data collected at the stage of product in progress in the manufacturing process on the way to the completion of the finished product. When the number of defective portions of the finished product is predicted to exceed the predetermined threshold in the manufacturing process on the way, it is possible to suppress the unnecessary man-hours and labors for product in progress by stopping the manufacture of the product in progress and is also possible to suppress the energy consumption for the man-hours and labors in the factory.

When the factory F is a foundry, a casting as a finished product is completed through a plurality of manufacturing processes by a plurality of facilities. Even if the product in progress of each process meets the predetermined tolerance and quality defined in each process, a plurality of defective portions (such as surface defects) may occur in the finished product after going through the final manufacturing process. These defective portions are usually corrected separately, but since the number of man-hours will increase significantly if the number of defective portions is excessive, the defective portions may be undesirable. The prediction system can predict the number of defective portions of the finished product in the manufacturing process relating to the casting on the way so that the data relating to the manufacture of each manufacturing process such as an atmosphere temperature of the manufacturing process, speed relating to the casting, quality parameters relating to the casting, temperature relating to the casting, temperature of materials, quality parameters of the materials, and time required for specific work in each process are the explanatory variables, and the number of defective portions of the casting as the finished product is as the objective variable. For this reason, even if the product in progress of each process satisfies the predetermined tolerance and quality defined in each process, it is possible to decide to stop the manufacture of the product in progress when the number of defective portions of the finished product exceeds the predetermined threshold based on the data relating to the manufacturing up to that point. As a result, it is possible to prevent the product in progress from spending more man-hours and labors than necessary in the subsequent manufacturing processes, and it is possible to suppress energy consumption in the factory.

Further, the parameters used as the explanatory variables described above can also be used for managing the manufacturing process.

More specifically, in case that a parameter relating to manufacturing that has a high contribution to the number of defective portions is clarified when the number of defective portions exceeds a predetermined threshold, it is possible to suppress that the number of defective portions exceeds a predetermined threshold by managing the parameter.

For example, in the process of selecting an explanatory variable from a plurality of explanatory variable candidates in the prediction system, in case that the datum relating to the manufacture of a specific manufacturing process, for example, the atmosphere temperature of the specific manufacturing process, is a parameter that has the highest contribution to the number of defective portions when predicting the number of defective portions of the finished product, and it is clarified that the number of defective portions of the finished product exceeds the predetermined threshold by the atmosphere temperature increases above a predetermined value, the manager can manage such that the number of defective portions of the finished product does not exceed the predetermined threshold by managing such that the atmosphere temperature does not increase above a predetermined value. For this reason, it is possible to prevent excessive man-hours from being spent for repairing defective portions, and it is possible to suppress from consuming more energy than necessary in the factory. In this case, the number of the managed parameter may not be one, and a plurality of parameters that contribute to the prediction of the number of defective portions may be managed as necessary.

The finished product in the present embodiment is not limited to a finished product as a product, and may include an intermediate product as the product which is a final product of a plurality of manufacturing processes targeted in the factory F.

Further, the prediction system may predict the determination result of defective product or non-defective product instead of the number of defective portions as the objective variable. Parameters that can be measured in finished products do not always exist when the appearance or shape defect of the product is used as a criterion for determining whether the product is defective or non-defective. In such a case, the prediction system can acquire a predicted value that is a value of 0 or more and 1 or less, for example, by setting a parameter in which a defective product is 0 and a non-defective product is 1 as an objective variable. At the stage of product in progress in the manufacturing process on the way to the completion of the finished product, the manager can predict the quality of the finished product such as the probability of defective products is high in case that this predicted value is smaller than the threshold value, and the probability of non-defective products is high in case that this predicted value is higher than the threshold value.

In addition, the prediction system may predict the location of the defective portion or the type of defection instead of the number of defective portions as the objective variable. That is, the manager can acquire as predicted value the probability that a predetermined location of a finished product will be defective or the probability that the finished product will be a predetermined type of defection, by causing the prediction system to learn the location of the defective portion and the type of defection. The manager can predict the quality of the finished product at the stage of the product in progress in the manufacturing process on the way to the completion of the finished product with reference to the predicted value output by the prediction system.

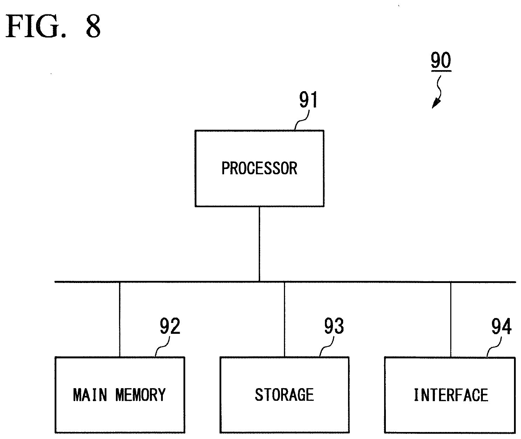

Fig. 8 is a schematic block diagram illustrating a configuration of a computer according to at least one embodiment.

A computer 90 includes a processor 91, a main memory 92, a storage 93, and an interface 94.

The above-described energy demand prediction device 10 is mounted on the computer 90. An operation of each of the above-described processing units is stored in the form of a program in the storage 93. The processor 91 reads the program from the storage 93, loads the program on the main memory 92, and performs the process in accordance with the program. The processor 91 guarantees a storage region corresponding to each of the above-described storages units in the main memory 92 in accordance with the program.

Examples of the storage 93 are HDD (Hard Disk Drive), SSD (Solid State Drive), magnetic disk, magneto-optical disk, CD-ROM (Compact Disc Read Only Memory), DVD-ROM (Digital Versatile Disc Read Only Memory), Semiconductor memory, and the like. The storage 93 may be an internal medium directly connected to the bus of the computer 90 or an external medium connected to the computer 90 via the interface 94 or a communication line. Further, when this program is distributed to the computer 90 through a communication line, the computer 90 that receives the distribution may expand the program in the main memory 92 and execute the above processing. In at least one embodiment, storage 93 is a non-transitory, tangible storage medium.

Further, the program may be a program for realizing some of the functions described above. Furthermore, the program may be a so-called difference file (difference program) that realizes the above-described function in combination with another program already stored in the storage 93.

### [INDUSTRIAL APPLICABILITY]

According to at least one of the above aspects, the energy demand prediction system can predict the energy demand of a factory in the factory including a plurality of facility, based on the input of explanatory variables relating to the operation of an arbitrary facility.

### [DESCRIPTION OF SYMBOLS]

- 1: Energy demand prediction system
- 10: Energy demand prediction device
- 101: History acquisition unit
- 102: History storage unit
- 103: Selection unit
- 104: Learning unit
- 105: Model storage unit
- 106: Plan input unit
- 107: Energy demand identification unit
- 108: Output unit
- 109: Candidate input unit
- 110: Unit-time changing unit
- E: Facility
- F: Factory
- E1: Predicted energy demand
- E2: Measured energy demand
- Th: Value of contract demand

## Claims

1. A prediction system comprising:
a selection unit configured to receive selection of at least one of an explanatory variable among a plurality of explanatory variable candidates relating to an operation of a factory;
a value input unit configured to receive input a value relating to the selected explanatory variable;
an identification unit configured to identify a value of an objective variable relating to the operation of the factory based on the input value; and
an output unit configured to output the identified value of the objective variable.

2. The prediction system according to claim 1, wherein
the value of the objective variable relating to the operation of the factory is a value relating to an energy demand of the factory.

3. The prediction system according to claim 1 or 2, further comprising:
a storage unit configured to store history data including a set of values of a plurality of explanatory variable candidates relating to an operation of a factory and a value of at least one of objective variable relating to the operation of the factory; and
a learning unit configured to learn parameters of a model in which the selected explanatory variable is input and the objective variable is output based on the history data; wherein
the identification unit identifies the value of the objective variable by inputting the input value into the learned model.

4. The prediction system according to claim 3, wherein
the set of values of the plurality of explanatory variable candidates relating to the operation of the factory and the value of at least one of objective variable relating to the operation of the factory stored in the storage unit is a set of values of the plurality of explanatory variable candidates relating to the operation of the factory and the value of at least one of objective variable relating to an energy demand of the factory; and
the value of the objective variable output by the model is a value relating to the energy demand of the factory.

5. The prediction system according to any one of claims 1 to 3, further comprising:
a candidate input unit configured to receive inputs of values of explanatory variable candidates added to the history data.

6. The prediction system according to any one of claims 1 to 5, wherein
the value input unit receives an input of a time series of values relating to the explanatory variable.

7. The prediction system according to claim 6, further comprising:
a unit-time changing unit configured to receive a change of unit time in the time series of the values relating to the explanatory variable.

8. The prediction system according to any one of claims 1 to 7, wherein
the output unit outputs a display screen including the identified value of the objective variable, and a value of the objective variable or a comparison value of the objective variable included in the history data.

9. The prediction system according to any one of claims 1 to 8, wherein
the input unit receives the input of the selected value relating to the explanatory variable in the plurality of the factories;
the identification unit identifies a sum value of values of the objective variable relating to the plurality of the factories based on the input values.

10. A prediction method comprising the steps of:
receiving selection of at least one of an explanatory variable among a plurality of explanatory variable candidates relating to an operation of a factory;
receiving input a value relating to the selected explanatory variable;
identifying a value of an objective variable relating to the operation of the factory based on the input value; and
outputting the identified value of the objective variable.

11. The prediction method according to claim 10, wherein
the value of the objective variable relating to the operation of the factory is a value relating to an energy demand of the factory.

12. A program which causes a computer to execute:
receiving selection of at least one of an explanatory variable among a plurality of explanatory variable candidates relating to an operation of a factory;
receiving input a value relating to the selected explanatory variable;
identifying a value of an objective variable relating to the operation of the factory based on the input value; and
outputting the identified value of the objective variable.

13. The program according to claim 12, wherein
the value of the objective variable relating to the operation of the factory is a value relating to an energy demand of the factory.
